# EUROPEAN PATENT APPLICATION

(11) **EP 4 579 276 A1**
(43) Date of publication of application: **02.07.2025**
(21) Application number: 23220572.4
(22) Date of filing: 28.12.2023
(51) Int. Cl.: G01S 7/4912, G01S 17/34, G01S 17/58, G01S 17/931

(54) **SYSTEM AND METHOD FOR MEASURING A RANGE TO AN OBJECT**

(71) Applicant: Scantinel Photonics GmbH, 89077 Ulm (DE)
(72) Inventor: Aksarin, Stanislav, 76187 Karlsruhe (DE)
(74) Representative: Ostertag & Partner Patentanwälte mbB

(57) **Abstract**

An FMCW LiDAR system (14) for measuring a range to an object (12) has a light source (16) that produces measuring light having a varying frequency. An optical circuitry emits the measuring light and receives measuring light that was reflected from the object (12). A detector (32) has a quadrature optical mixer (36) that receives the measuring light and reference light which was not reflected from the object (12). The detector produces an in-phase radio beat frequency and a quadrature shifted radio beat frequency based on a superposition of the measuring light and the reference light. A phase-locked loop (46) produces, based on the in-phase radio beat frequency and the quadrature shifted radio beat frequency received from the quadrature mixer, an electrical signal (S) representing an absolute value and a sign of a synthesized beat frequency. A computing unit (35) computes a range to the object (12) based on the electrical signal (S). Since the sign of the beat frequency is preserved, the Doppler ambiguity is resolved.

## Description

### BACKGROUND OF THE INVENTION

### 1. Field of the Invention

The invention relates to a system and a method for measuring a range to an object based on FMCW LiDAR technology. Such systems can be used, for example, in autonomously driving vehicles and can be implemented as photonic integrated circuits (PIC) that do not contain any moving part.

### 2. Description of Related Prior Art

Frequency-modulated continuous wave (FMCW) is a range and radial velocity measuring technology which was originally developed for RADAR applications. If light instead of radio waves are used, this technology is usually referred to as FMCW LiDAR, in which LiDAR is an acronym for "Light Detection And Ranging".

In FMCW LiDAR systems, frequency-modulated light beams scan the environment. A small fraction of the light, which is diffusely reflected at an object, is received and superimposed with a local oscillator wave. The frequency difference between the two signals, which is usually referred to as beat frequency, is measured and used to compute the range ***R*** of the object and the relative velocity ***v*** in beam direction. By using a tunable laser as light source and a photodiode as detector, the beat frequency can be extracted directly from the photodiode current, because the photodiode delivers a current that is proportional to the squared sum of the two optical waves ("self-mixing effect").

If the object does not move relative to the measuring system (***v*** = 0), a single measurement with a constant laser frequency tuning rate (FTR) and a subsequent FFT (Fast Fourier Transform) of the temporal measurement signal is sufficient to compute the range ***R*.**

However, if the object moves relative to the measuring system (***v*** ≠ 0), a Doppler shift occurs, which must be taken into account in the range calculation to avoid systematic errors. Since the velocity ***v*** is unknown, at least one further measurement with a different FTR is necessary. Usually there is an up-chirp interval in which FTR is a positive constant ***r_{chirp}*** and a down-chirp interval in which the FTR = -***r_{chirp}***, resulting in a triangular wave like frequency variation. Two measurements, one in the up-chirp and one in the down-chirp interval, double the measurement time for one pixel (here one pixel represents a range and a velocity information), but with the benefit of obtaining additional velocity information.

In FMCW systems it has to be known whether the Doppler frequency is smaller or larger than the beat frequencies that would be obtained for the stationary case. In RADAR systems this is of little concern, because the Doppler frequency shift is always much smaller than the beat frequencies that would be obtained for the stationary case. However, in LiDAR systems the carrier frequency and also the FTRs are much higher than in RADAR applications. It turns out that for typical FMCW LiDAR applications the absolute value of the Doppler frequency shift is in the same range as the beat frequencies representing the range information that would be obtained for the stationary case. Since it is unknown whether the Doppler frequency shift is positive or negative, the equations for determining the range ***R*** and the velocity ***v*** cannot be solved unambiguously. This problem is sometimes referred to as Doppler ambiguity.

One approach to remove this ambiguity is to add a time interval in which FTR = 0. The additional interval may also be added between the up-chirp interval and the down-chirp interval. This approach of adding an interval with FTR = 0 successfully solves the Doppler ambiguity issue. However, it requires an additional measurement time and subsequent FFT computation for each pixel. This impedes attempts to increase the pixel rate.

In this context it should be noted that the requirements of the users - in particular manufacturers of autonomous vehicles - regarding the pixel rate are currently still far beyond what can be provided by LiDAR systems at acceptable costs. This is due to the fact that users generally expect an angular resolution of at least 0.1° with a large field of view (FOV) of at least 40° x 20° and a high frame rate of typically 25 fps. These requirements correspond to a total pixel rate of 2 million pixels/s. For this reason, it is desirable to remove the Doppler ambiguity with as few sequential FFT measurements per pixel as possible.

US 10,578,738 B2 relates to a chirped laser radar system that is described to be capable of unambiguously detecting the range and the velocity relative to a moving target. The system comprises two laser sources having different chirp rates, wherein in one embodiment one of the chirp rates is zero. However, the provision of a second laser significantly increases the system complexity.

### SUMMARY OF THE INVENTION

It is therefore an object of the present invention to provide a system and a method for measuring the range (and possibly also the radial velocity) to an object based on FMCW LiDAR technology that resolves the Doppler ambiguity in a simple manner and without compromising the pixel rate.

This object is achieved, in accordance with the invention, by an FMCW LiDAR system for measuring a range to an object comprising a light source configured to produce light having a varying frequency, an optical circuitry configured to emit the light produced by the light source and to receive measuring light that was reflected from the object, and a detector. The latter comprises a quadrature optical mixer configured to receive the measuring light and reference light, which was not reflected from the object, and to produce an in-phase radio beat frequency and a quadrature shifted radio beat frequency based on a superposition of the measuring light and the reference light, and a phase-locked loop configured to produce, based on the in-phase radio beat frequency and the quadrature shifted radio beat frequency received from the quadrature mixer, an electrical signal representing an absolute value and a sign of a synthesized beat frequency. A computing unit is configured to compute a range to the object based on the electrical signal.

The invention is based on the perception that it is possible to detect the sign of the beat frequency if the superposition of the measuring light and the reference light is described by a combination of the in-phase radio beat frequency and the quadrature shifted radio beat frequency. Mathematically speaking, these two signals represent the real part and the imaginary part of the complex beat frequency and thus bear the information about the sign of the beat frequency which is required to resolve the Doppler ambiguity. Using a phase-locked loop, it is possible to extract from these two signals a synthesized beat frequency represented by a locked electrical signal that has a sign corresponding to the sign of the beat frequency. This beat frequency is referred to as "synthesized" because it has been reconstructed from the in-phase and quadrature shifted components of the "original" beat frequency detected in the quadrature optical mixer.

Since the locked electrical signal represents both the absolute value and the sign of the beat frequency, it is possible to compute the range and velocity information unambiguously without a need to compute a Fast Fourier Transform (FFT) for thousands of points in real time.

In an embodiment, the quadrature optical mixer comprises a quadrature hybrid coupler comprising a first input configured to receive the measuring light, a second input configured to receive the reference light, and four exits combining the measuring light and the reference light with different phase delays. The quadrature optical mixer further comprises a first pair of photodetectors connected to two of the four exits of the quadrature hybrid coupler and configured to produce the in-phase radio beat frequency, and a second pair of photodetectors connected to the other two of the four exits of the quadrature hybrid coupler and configured to produce the quadrature shifted radio beat frequency. Such a coupler, which splits the input signal into two output signals of equal magnitude and with a 90° degree phase difference, ensures low-loss in-phase and quadrature signal generation, while the paired (i.e. balanced) photodetectors suppress the common-mode signal. It is also possible to replace each photodetector by a pair of balanced photodetectors.

The phase-locked loop may comprise an oscillator, a first electrical mixer configured to mix the in-phase radio beat frequency with an in-phase oscillator signal received from the oscillator, and a second electrical mixer configured to mix the quadrature shifted radio beat frequency with a quadrature shifted oscillator signal received from the oscillator. An adder adding the two mixed signals may then fed the added signals to a lag-type or lag-lead type loop filter producing a filtered signal that is supplied to the oscillator, which is preferably a voltage-controlled oscillator.

The system may comprise a quadrature splitter that is connected to the oscillator and comprises a first exit port connected to the first electrical mixer and a second exit port connected to the second electrical mixer.

With regard to the method, the object outlined above is achieved by a method for measuring a range to an object using an FMCW LiDAR system comprising the following steps:
a) producing light having a varying frequency;
b) emitting the light and receiving measuring light that was reflected from the object;
c) producing an in-phase radio beat frequency and a quadrature shifted radio beat frequency from a superposition of the measuring light and the reference light;
d) producing, in a phase-locked loop and based on the in-phase radio beat frequency and the quadrature shifted radio beat frequency, an electrical signal representing an absolute value and a sign of a synthesized beat frequency; and
e) computing a range to the object based on the electrical signal.

### BRIEF DESCRIPTION OF THE DRAWINGS

Various features and advantages of the present invention may be more readily understood with reference to the following detailed description taken in conjunction with the accompanying drawings in which:
- Figure 1: is a schematic side view of a vehicle approaching an object which is detected by a LiDAR system;
- Figure 2: is a top view of the LiDAR system shown in Figure 1;
- Figure 3: schematically shows the layout of a LiDAR system according to an embodiment of the invention;
- Figure 4: is a graph showing the time dependency of the frequency of a light source included in the LiDAR system;
- Figure 5: schematically shows the layout of the detector included in the LiDAR system; and
- Figure 6: is a more detailed representation of the detector shown in Figure 5;
- Figure 7: is a graph in which the amplitude of an in-phase radio beat frequency Sl f_{b} and an in-phase oscillation signal f_{0,0°} produced in a phase-locked loop of the detector is plotted against time;
- Figur 8: is a graph in which the amplitude of a quadrature shifted radio beat frequency SQ f_{b} and a quadrature shifted oscillation signal f_{0,90°} produced in the phase-locked loop of the detector is plotted against time;
- Figure 9: is a graph in which the amplitude of the in-phase lower side band signal LSB_{0°} and the quadrature shifted lower side band signal LSB_{90°} are plotted against time; and
- Figure 10: is a graph in which the beat frequency f_{b} and a voltage signal S obtained from the sum of the signals shown in Figure 9 after loop filtering are plotted against time.

### DESCRIPTION OF PREFERRED EMBODIMENTS

### 1. Application scenario

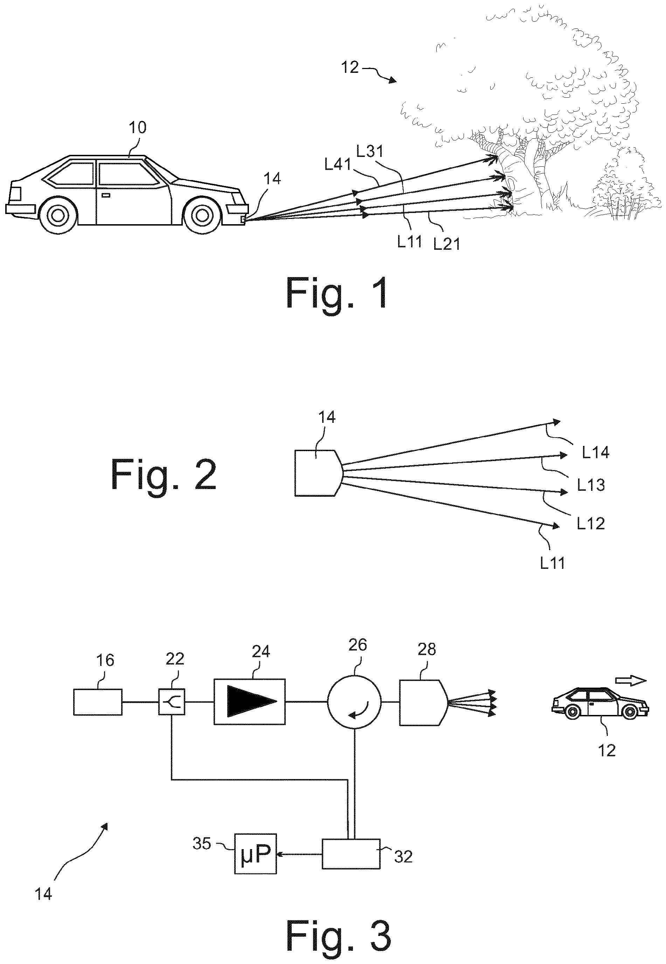

Figure 1 is a schematic side view showing a vehicle 10 that approaches an object 12 represented by a tree. The vehicle 10 has a LiDAR system 14 that scans the environment lying ahead of the vehicle 10 with light beams L11, L21, L31, and L41. From range information associated to each light beam, a three-dimensional image of the environment is computationally reconstructed. In addition, the LiDAR system 14 determines the relative velocity to the object 12 along the direction of the respective light beam L11, L21, L31, and L41. This information is particularly important if the object 12 is not fixed, but moves, too.

The information computed by the LiDAR system 14 about the environment lying ahead of the vehicle 10 may be used, for example, to assist the driver of the vehicle 10 in various ways. For example, warning messages may be generated if a collision of the vehicle 10 with the object 12 threatens. If the vehicle 10 drives autonomously, range and velocity information about the environment lying ahead are required by the algorithms that control the vehicle 10.

As is apparent in Figure 1, the LiDAR system 14 emits the light beams L11 to L41 in different directions in a vertical plane (i.e. the plane of the paper in Figure 1) so that the environment is scanned in the vertical direction. Scanning also takes place simultaneously in the horizontal direction, as Figure 2 illustrates in a top view of the LiDAR system 14. Four light beams L11, L12, L13 and L14 are emitted in a horizontal plane in different directions.

Only for the sake of simplicity it is assumed in Figures 1 and 2 that only four light beams Ln1 to Ln4 are emitted vertically and horizontally. However, in real applications that LiDAR system 14 emits many more light beams. For example, ***k*·2*ⁿ*** light beams are preferred, wherein ***n*** is a natural number which is typically between 7 and 13 and specifies how many beams are emitted in one of ***k*** (horizontal or inclined) planes, wherein ***k*** is a natural number which is typically between 1 and 16.

### 2. LiDAR system

Figure 3 schematically shows the layout of the LiDAR system 14. The LiDAR system 14 is configured as an FMCW LiDAR system and comprises a light source 16. During operation of the LiDAR system 14, the light source 16 produces light having a frequency ***f_{chirp}*** that periodically varies ("chirps") between a lower frequency ***fₗ*** and a higher frequency ***fₕ*.**

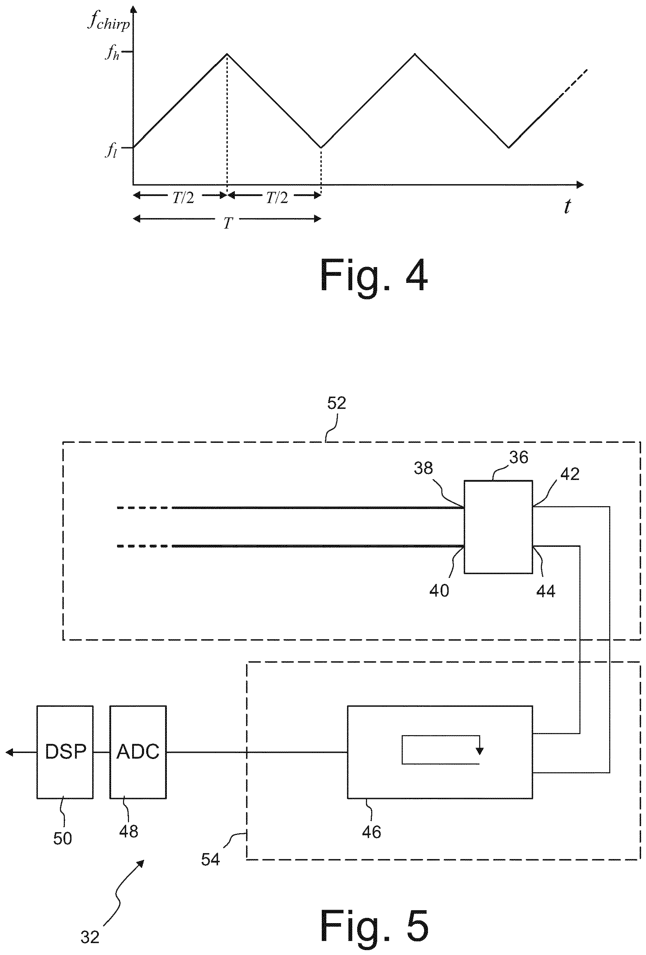

The graph of Figure 4 shows in more detail how the frequency ***f_{chirp}*** of the light source 16 varies over time ***t*** in this embodiment. Each measurement interval having a chirp duration ***T*** is divided into two halves of equal length *T*/*2.* During the first interval, the frequency ***f_{chirp}*** increases linearly with a constant and positive up-chirp rate ***r_{chirp},*** i.e. d***f_{chirp}***/d***t*** = ***r_{chirp}.*** The first interval is often referred to as up-chirp interval. During the second interval, the frequency ***f_{chirp}*** decreases linearly with a constant negative down-chirp rate ***-r_{chirp},*** i.e. d***f_{chirp}***/d***t*** = ***-r_{chirp}·*** This results in a triangular wave like frequency variation as shown in Figure 4.

Referring again to Figure 3, the light source 16 is connected to a splitter 22 that splits the measuring light into reference light (sometimes also referred to as "local oscillator") and measuring light. In this embodiment, the measuring light passes an optical amplifier 24 and an optical circulator 26 that guides the amplified output light towards a scanning unit 28. An optical circulator has three ports A, B and C and has the property that light entering one port leaves the next port. Therefore, light entering port A leaves port B, light entering port B leaves port C, and light entering port C leaves port A. For example, the optical circulator 26 may comprise a polarization sensitive beam splitter and a Faraday rotator that is arranged in the optical path upstream the scanning unit 28 so as to rotate the state of polarization by 45°, as this is known in the art as such. This ensures that measuring light from the amplifier 24 passes the beam splitter without being deviated, while the state of polarization of light reflected from the object 12 will undergo a rotation of 2·45° so that it is deviated by the polarization sensitive beam splitter.

Instead of using an amplifier 24 that amplifies only the measuring light, it is also possible, for example, to amplify the measuring light before it enters the splitter 22, to use at least one amplifier arranged in at least one light path between the light sources 16, 18 and the optical combiner 20, or to dispense with the amplifier 24 completely.

The scanning unit 28 directs the measuring light towards the object 12 - in Figure 3 represented by a moving car - along different directions, as it has been explained above with reference to Figures 1 and 2. While some part of each measuring light beam is usually absorbed by the object 12, another part is reflected. As long as the surface of the object 12 is not perfectly specular, diffuse reflection occurs which ensures that some measuring light is reflected at the object 12 such that it propagates back towards the scanning unit 28. The reflected measuring light is received by the scanning unit 28 and guided towards the optical circulator 26.

The optical circulator 26 directs the measuring light towards a detector 32 that will be explained in more detail below. Because of the constantly varying frequency ***f_{chirp}*** of the light emitted by the light source 16, the frequencies of the reference light and the measuring light, which has propagated to the object 12 and back to the LiDAR system 10, are slightly different. Consequently, a superposition of the reference light and the measuring light results in an optical beat frequency that is detected by the detector 32. The electrical signal produced by the detector 32 is fed to a computing unit 35 that computes the range R to the object and the relative velocity ***v*** between the LiDAR system 14 and the object 12 by analyzing the beat frequencies resulting from the superposition detected by the detector 32.

Since no light has to be routed from the detector 32 towards the splitter 22, using the optical circulator 26 is not mandatory. Often it suffices to use simpler polarization sensitive beam splitting elements instead of the optical circulator 26.

### 3. Detector

Figure 5 schematically shows the most important functional components of the detector 32. The latter comprises a quadrature optical mixer 36 having a first input 38 and a second input 40. The first input 38 is connected to the optical circulator 26 and receives the measuring light that has been reflected from the object 12. The second input 40 is connected to the splitter 22 and receives the reference light that has not been reflected from the object 12. On the output side, the quadrature optical mixer 36 has a first output 42 for outputting a first electrical signal representing an in-phase radio beat frequency, and a second output 44 for outputting a second electrical signal representing a quadrature shifted radio beat frequency. The two radio beat frequency signals are produced by photodiodes in the quadrature optical mixer 36 at which the measuring light and the reference light superimpose.

The detector 32 further comprises a phase-locked loop 46 that produces, based on the in-phase radio beat frequency and the quadrature shifted radio beat frequency received from the quadrature mixer 34, an electrical signal representing an absolute value and a sign of a synthesized beat frequency.

This analog electrical signal is converted to a digital signal by an analog-to-digital converter (ADC) 48 and then input to a digital signal processor (DSP) 50. The latter is part of the computing unit 35 that computes the range to the object 12 and the relative radial velocity based on the synthesized beat frequency, as this is known in the art as such.

In the embodiment shown, the quadrature optical mixer 36 is part of a Si-SiN based photonic integrated circuit (PIC) 52, while the phase-locked loop 46 is part of an electronic integrated circuit 54. Both circuits 52, 54 are connected by electrical lines transmitting the in-line and quadrature shifted radio beat frequencies.

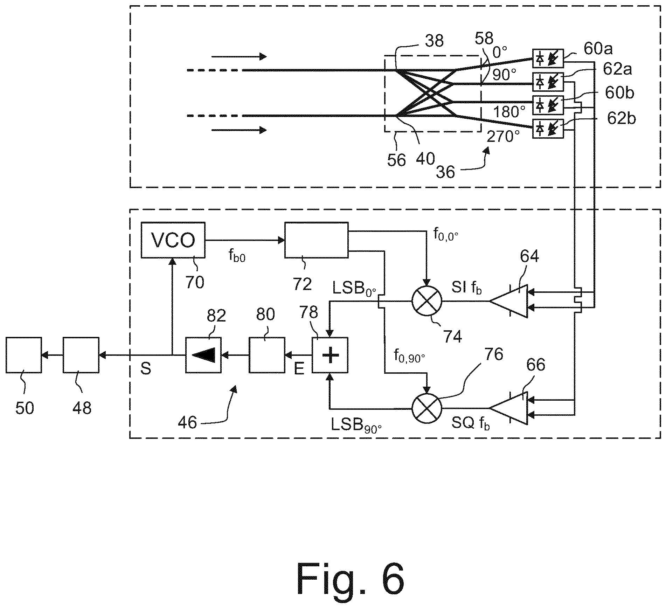

Figure 6 shows the detector 32 in a still schematic, but more detailed representation.

The quadrature optical mixer 36 comprises a quadrature hybrid coupler 56, which in this embodiment is formed by a 2 x 4 star coupler comprising the two inputs 38, 40 and four outputs 58 that combine light from the two inputs 38, 40 with phase delays of 0°, 90°, 180° and 270°, respectively. The quadrature optical mixer 36 further comprises two first photodetectors 60a, 60b and two second photodetectors 62a, 62b each having an electrical output and being connected to one of the outputs 58 of the quadrature hybrid coupler 56.

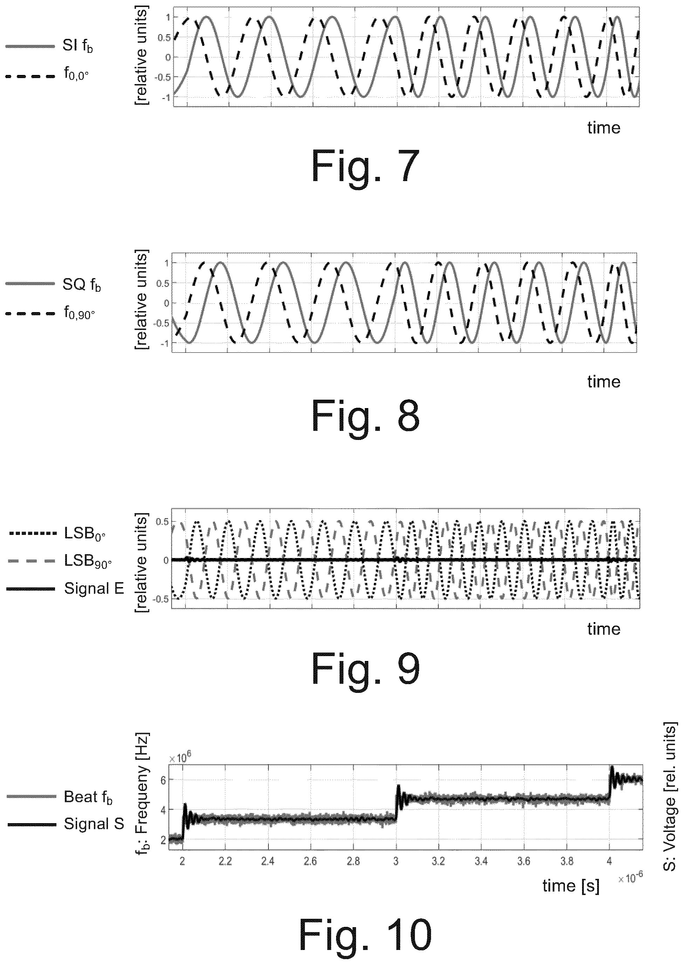

The output currents of the first photodetectors 60a, 60b are combined and converted by a first transimpedance amplifier 64 to a voltage corresponding to the in-phase radio beat frequency denoted in Figure 6 as Sl f_{b}. Similarly, the output currents of the second photodetectors 62a, 62b are combined and converted by a second transimpedance amplifier 66 to a voltage corresponding to the quadrature shifted radio beat frequency denoted in Figure 6 as SQ f_{b}. Simulated examples of Sl f_{b} and SQ f_{b} signals are shown in the graphs of Figures 7 and 8 in solid grey lines. In both graphs the amplitude is plotted relative arbitrary units against the time. Here it is assumed that the beat frequency f_{b} increases in a stepwise manner three times during the time shown in the graphs.

The phase-locked loop 46 comprises in this embodiment a voltage-controlled oscillator (VCO) 70 that is connected to a quadrature splitter 72 converting the oscillations with frequency f_{b0} produced by the voltage-controlled oscillator 70 into an in-phase (0°) oscillation signal f_{0,0°} and a quadrature shifted (90°) oscillation signal f_{0,90°}. For the exemplary Sl f_{b} and SQ f_{b} signals that are shown in Figures 7 and 8 as grey solid lines, the two f_{0,90°} and f_{0,90°} signals are represented as dashed black lines in Figures 7 and 8, respectively.

The in-phase oscillation signal f_{0,0°'} and the in-phase radio beat frequency Sl f_{b} both shown in Figure 7 are mixed in a first mixer 74 so that an in-phase lower side band signal LSB_{0°} is obtained. This in-phase lower side band signal LSB₀ has twice the frequency of the in-phase signals Sl f_{b} and f_{0,0°} and is shown as dotted black line in Figure 9.

Similarly, the quadrature shifted oscillation signal f_{0,90°} and the quadrature shifted radio beat frequency SQ f_{b} both shown in Figure 8 are mixed in a second mixer 76 so that a quadrature shifted lower side band signal LSB_{90°} is obtained. This quadrature shifted lower side band signal LSB_{90°} has twice the frequency of the quadrature shifted signals SQ f_{b} and f_{0,90°} and is shown as dashed grey line in Figure 9.

The phase-locked loop 46 further comprises a phase detector 78 that adds the two lower side band signals LSB_{0°} and LSB_{90°}. The resulting an electrical signal E is represented as solid black line in Figure 9 and represents the deviation of the beat frequency f_{b} from the beat frequency f_{b0} produced by the voltage-controlled oscillator 70. It can be seen that this signal E is almost zero and has a non-zero amplitude only at times when the frequency of the two lower side band signals LSB_{0°} and LSB_{90°} changes.

The signal E is then fed to a loop filter 80 and amplified in an amplifier 82. The loop filter 80 compensates the common delay in the loop. In a simplified version, the loop filter 80 is formed by a lag compensator including an integrating stage. The limiting factor in that case is the PI (proportional integral) controller.

The filtered and amplified voltage signal S, whose voltage is shown in Figure 10 as black solid line, is substantially proportional to the beat frequency f_{b} (see grey solid line in Figure 10) and forms the input both for the voltage-controlled oscillator 70 and for the analog to digital converter 48. Since this proportionality includes both the absolute value and the sign of the beat frequency, it is possible to compute the range and velocity information unambiguously from the filtered and amplified signal S. Since the voltage signal S directly indicates the beat frequency, it is not necessary to derive this information from a *Fast Fourier Transform* (FFT) which is too time consuming for thousands of points in real time.

## Claims

1. An FMCW LiDAR system (14) for measuring a range to an object (12), comprising
a light source (16) configured to produce light having a varying frequency,
an optical circuitry configured to emit the light produced by the light source and to receive measuring light that was reflected from the object (12),
a detector (32) comprising
a quadrature optical mixer (36) configured to
receive the measuring light and reference light, which was not reflected from the object (12), and to
produce an in-phase radio beat frequency and a quadrature shifted radio beat frequency based on a superposition of the measuring light and the reference light, and
a phase-locked loop (46) configured to produce, based on the in-phase radio beat frequency and the quadrature shifted radio beat frequency received from the quadrature mixer, an electrical signal (S) representing an absolute value and a sign of a synthesized beat frequency, and
a computing unit (35) configured to compute a range to the object (12) based on the electrical signal (S).

2. The FMCW LiDAR system of claim 1, wherein the quadrature optical mixer (36) comprises
a quadrature hybrid coupler (56) comprising a first input (38) configured to receive the measuring light, a second input (40) configured to receive the reference light, and four exits (58) combining the measuring light and the reference light with different phase delays;
a first pair of photodetectors (60a, 60b) connected to two of the four exits (58) of the quadrature hybrid coupler (56) and configured to produce the in-phase radio beat frequency, and
a second pair of photodetectors (62a, 62b) connected to the other two of the four exits (58) of the quadrature hybrid coupler (56) and configured to produce the quadrature shifted radio beat frequency.

3. The FMCW LiDAR system of claim 1 or 2, wherein the phase-locked loop (46) comprises
an oscillator (70),
a first electrical mixer (74) configured to mix the in-phase radio beat frequency with an in-phase oscillator signal received from the oscillator (70),
a second electrical mixer (76) configured to mix the quadrature shifted radio beat frequency with a quadrature shifted oscillator signal received from the oscillator (70).

4. The FMCW LiDAR system of 3, wherein the oscillator (70) is fed by a driving signal produced by a lag-type or lag-lead type loop filter (80).

5. The FMCW LiDAR system of 3 or 4, wherein the oscillator is a voltage-controlled oscillator (70).

6. The FMCW LiDAR system of any of claims 3 to 5, comprising a quadrature splitter (72) that is connected to the oscillator (70) and comprises a first exit port connected to the first electrical mixer (74) and a second exit port connected to the second electrical mixer (76).

7. A method for measuring a range to an object using an FMCW LiDAR system (14), comprising the following steps:
a) producing light having a varying frequency;
b) emitting the light and receiving measuring light that was reflected from the object (12);
c) producing an in-phase radio beat frequency and a quadrature shifted radio beat frequency from a superposition of the measuring light and the reference light;
d) producing, in a phase-locked loop (46) and based on the in-phase radio beat frequency and the quadrature shifted radio beat frequency, an electrical signal representing an absolute value and a sign of a synthesized beat frequency; and
e) computing a range to the object (12) based on the electrical signal.

8. The method of claim 7, wherein the in-phase radio beat frequency is mixed with an in-phase oscillator signal received from an oscillator (70), and the quadrature shifted radio beat frequency is mixed with a quadrature shifted oscillator signal received from the oscillator (70).

9. The method of claim 8, wherein the oscillator (70) is fed by a driving signal produced by a lag-type or lag-lead type loop filter (80).
